# EUROPÄISCHE PATENTSCHRIFT

(11) **EP 1 371 184 B1**
(45) Veröffentlichungstag und Bekanntmachung des Hinweises auf die Patenterteilung: **18.10.2006**
(21) Anmeldenummer: 02726057.9
(22) Anmeldetag: 11.03.2002
(51) Int. Cl.: H04L 12/44, H04L 12/56

(54) **ELEKTRONISCHER SCHALTKREIS UND VERFAHREN FÜR EINE KOMMUNIKATIONSSCHNITTSTELLE MIT ZWISCHENSPEICHERUNG**
ELECTRONIC SWITCHING CIRCUIT AND METHOD FOR A COMMUNICATION INTERFACE WITH BUFFER STORAGE
CIRCUIT DE COMMUTATION ELECTRONIQUE ET PROCEDE DESTINES A UNE INTERFACE DE COMMUNICATION AVEC MEMOIRE TAMPON INTERMEDIAIRE

(30) Priorität: 22.03.2001 DE 10114390; 22.08.2001 DE 10141187
(43) Veröffentlichungstag der Anmeldung: 17.12.2003
(73) Patentinhaber: SIEMENS AKTIENGESELLSCHAFT, 80333 München (DE)
(72) Erfinder: GÖTZ, Franz-Josef, 91180 Heideck (DE)
(86) Internationale Anmeldenummer: PCT/DE2002/000850
(87) Internationale Veröffentlichungsnummer: WO 2002/078251

(56) Entgegenhaltungen:
- WO-A-00/08800
- US-A- 4 639 910
- US-A- 4 823 340
- US-A- 5 251 313

## Beschreibung

Die Erfindung bezieht sich auf ein System und ein Verfahren zur parallelen Nutzung unterschiedlicher Übertragungsraten in Kommunikationssystemen.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden. Als Datennetze werden beispielsweise Bussysteme wie z.B. Feldbus, Profibus, Ethernet, Industrial Ethernet, FireWire oder auch PC-interne Bussysteme (PCI), etc. verwendet.

Aus verschiedenen Gründen werden in dezentralen Systemen zwischen verschiedenen Knoten unterschiedliche Übertragungsraten (z.B. Ethernet: 10MBit/s, 100MBit/s, 1MBit/s usw.) und unterschiedliche Kommunikationszyklen benötigt, wobei es Knoten (künftig als Koppelknoten bezeichnet) gibt, die in diesem Fall gleichzeitig mit Knoten kommunizieren müssen, die unterschiedliche Übertragungsraten und unterschiedliche Kommunikationszyklen benutzen.

Der Stand der Technik ist dadurch gekennzeichnet, dass die Koppelknoten über mehrere separate Kommunikationsschnittstellen verfügen. Das Zusammenführen der Daten erfolgt oberhalb der Kommunikationsschnittstelle.

US 4,639,910 A offenbart alle Merkmale des Oberbegriffs von Anspruch 1. Dieses Dokument befasst sich nicht mit Echtzeitkommunikation und beschreibt einen elektrischen Schaltkreis, bei dem jeder Port des Schaltkreises die Steuerung übernehmen kann. Die Ports können mit unterschiedlichen Datenraten betrieben werden.

Die Erfindung bezieht sich auf eine Kommunikationsanschaltung (Switch-ASIC), die a priori mehrere separate Kommunikationsverbindungen (Ports) beinhaltet. Die Kommunikation über die verschiedenen Verbindungen erfolgt heute synchron in einem für alle Ports gleichen Kommunikationszyklus und gleicher Übertragungsrate. Die Erfindung bezieht sich auf einen Mechanismus, der verschiedene Übertragungsraten und verschiedene Kommunikationszyklen an den verschiedenen Ports ermöglicht. Damit ist ein konsistenter Austausch von Daten zwischen Knoten möglich, die mit verschiedenen Übertragungsraten und evtl. unterschiedlichen Kommunikationszyklen arbeiten. Der konsistente Datenaustausch erfolgt über einen Zwischenpuffer in einem gemeinsamen Speicher. D.h. vom Empfangsport werden die Daten immer in den gemeinsamen Zwischenpuffer geschrieben. Vom Sendeport werden die Daten zum entsprechenden Sendezeitpunkt aus dem Zwischenpuffer versendet.

Es werden unterschiedliche Übertragungsraten und unterschiedliche Kommunikationszyklen für die einzelnen Ports eines Switch-ASICs zu unterstützt. Damit die Datenkonsistenz gewährleistet werden kann, gibt es an an jedem Port zusätzlich einen Sende- und Empfangspuffer (entsprechend max. Telegrammlänge). Erst wenn das Telegramm am Empfangsport komplett empfangen worden ist, werden die Daten in den gemeinsamen Zwischenpuffer kopiert. Beim Senden werden die Daten immer aus den Zwischenpuffer in den Sendepuffer des Sendeports kopiert. Durch eine Zugriffssteuerung auf den gemeinsamen Zwischenspeicher wird gewährleistet, dass es während des Lesens und Schreibens in den Zwischenpuffer zu keinen Überholungen kommen kann.

Der Vorteil liegt darin, dass
a) auf einem Koppelknoten nur eine (Standard-) Kommunikationsschnittstelle implementiert werden muss und
b) unter Umständen keine zusätzliche Instanz zum Umkopieren der Daten zwischen den verschiedenen Kommunikationsschnittstellen notwendig ist.

### Synchronisation unterschiedlicher Übertragungsraten

In einem Netzwerk (z.B. isochrones Realtime Fast Ethernet-Netzwerk-RTF) sind die Knoten durch "Punkt zu Punkt"-Verbindungen miteinander verbunden. Mehrere Knoten können zu einem Cluster zusammengefasst werden. Ein gesamtes Netzwerk kann aus vielen solchen Clustern bestehen, wobei die Übertragungsraten der einzelnen Cluster verschieden sein können.

Von besonderem Vorteil ist es darüber hinaus, dass die offenbarten Verfahren insbesondere bei und in Verpackungsmaschinen, Pressen, Kunststoffspritzmaschinen, Textilmaschinen, Druckmaschinen, Werkzeugmaschinen, Roboter, Handlingsystemen, Holzverarbeitungsmaschinen, Glasverarbeitungsmaschinen, Keramikverarbeitungsmaschinen sowie Hebezeugen eingesetzt bzw. verwendet werden können.

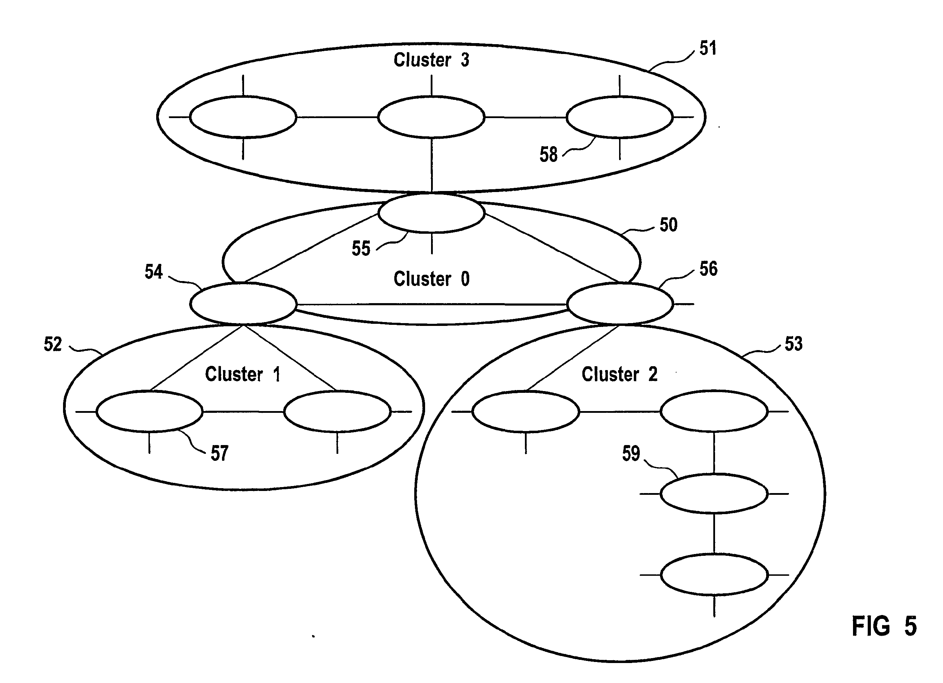

Wie in FIG 5 dargestellt, kann es für bestimmte Anwendungen erforderlich sein, dass Cluster mit verschiedenen Übertragungsraten miteinander Realtime-Daten(RT - Echtzeit) austauschen müssen.

Der Erfindung liegt die Aufgabe zu Grunde ein verbessertes Verfahren und einen verbesserten elektronischen Schaltkreis für eine Kommunikationsschnittstelle sowie ein entsprechendes Computerprogrammprodukt zu schaffen.

Die der Erfindung zu Grunde liegende Aufgabe wird mit den Merkmalen der unabhängigen Patentansprüche jeweils gelöst.

Die Erfindung erlaubt es eine Kommunikationsschnittstelle zwischen verschieden performanten zyklisch getakteten Kommunikationsverbindungen zu realisieren. Dadurch ermöglicht es die Erfindung, beispielsweise in einem Automatisierungssystem verschieden performante Kommunikationsverbindungen zu betreiben, deren Charakteristik der jeweiligen Applikation angepasst ist. Beispielsweise kann mittels der Erfindung für langsame Ein- / Ausgabebaugruppen eine niederperformante Kommunikationsschnittstelle zu Verfügung gestellt werden, so dass die Baugruppen über eine entsprechende Schnittstelle mit der zugeordneten Ablaufebene in der Steuerung kommunizieren können.

Ein besonderer Vorteil der Erfindung ist darin zu sehen, dass sie das Zusammenführen von Datentelegrammen unterschiedlicher Kommunikationsverbindungen unterschiedlicher Übertragungsraten und / oder unterschiedlicher Kommunikationszyklen auf der Ebene eines Koppelknotens erlaubt, ohne dass hierfür ein Anwendungsprogramm auf einer höheren logischen Schicht benötigt wird. Dies ist insbesondere für eine Kommunikationsanschaltung, einen so genannten Switch-ASIC, vorteilhaft, wobei diese Kommunikationsanschaltung mehrere separate Ports für verschiedene Kommunikationsverbindungen beinhalten kann.

Ein weiterer besonderer Vorteil der Erfindung liegt darin, dass ein konsistenter Austausch von Echtzeitdaten in einem deterministischen Kommunikationssystem unterschiedlicher Teilnetzwerke, die jeweils unterschiedliche Übertragungsraten und / oder Kommunikationszyklen aufweisen, ermöglicht wird.

Für die konsistente Übertragung von Echtzeitdaten ist entscheidend, dass diese jeweils einem bestimmten Übertragungszyklus zugeordnet sind, und zwar auch über die Kommunikationsschnittstelle zwischen den einzelnen Teil-Netzwerken hinweg. Eine solche feste Zuordnung von Echtzeitdaten zu bestimmten Übertragungszyklen über die Grenzen der Teil-Netzwerke hinweg erlaubt die Erfindung.

In einer bevorzugten Ausführungsform der Erfindung erfolgt der konsistente Datenaustausch über einen Zwischenpuffer, das heißt, von dem Empfangsport werden die Daten immer in den gemeinsamen Zwischenpuffer geschrieben und von dem Sendeport werden die Daten zu dem entsprechenden Sendezeitpunkt aus dem Zwischenpuffer abgerufen. Zusätzlich kann es an jedem Port einen Sende- und Empfangspuffer geben. Die Tiefe der Sende- und Empfangspuffer muss in diesem Fall mindestens ausreichen, um ein Datentelegramm einer maximalen Telegrammlänge aufzunehmen. Erst wenn das Datentelegramm am Empfangsport komplett empfangen worden ist, werden die Daten in den gemeinsamen Zwischenspeicher kopiert. Beim Senden werden die Daten aus dem Zwischenspeicher in den Sendepuffer des Sendeports kopiert.

Nach einer weiteren bevorzugten Ausführungsform der Erfindung wird durch eine Zugriffssteuerung des gemeinsamen Zwischenspeichers gewährleistet, dass es während des Lesens und des Schreibens in den Zwischenspeicher zu keinen Überholungen kommen kann.

Von besonderem Vorteil ist dabei, dass auf einem Koppelknoten nur eine Standardkommunikationsschnittstelle implementiert werden muss und dass keine zusätzliche Instanz zum umkopieren der Daten zwischen den verschiedenen Kommunikationsschnittstellen notwendig ist.

Ein weiterer Vorteil der Erfindung ist, dass sich ein Automatisierungssystem realisieren lässt, welches verschieden performante Teil-Netze beinhaltet, insbesondere zur Anwendung bei und in Verpackungsmaschinen, Pressen, Kunststoffspritzmaschinen, Textilmaschinen, Druckmaschinen, Werkzeugmaschinen, Roboter, Handlingssystemen, Holzverarbeitungsmaschinen, Glasverarbeitungsmaschinen, Keramikverarbeitungsmaschinen sowie Hebezeugen.

Im Weiteren wird ein bevorzugtes Ausführungsbeispiel der Erfindung mit Bezugnahme auf die Zeichnungen näher erläutert. Es zeigen:
- Fig. 1: ein Blockdiagramm einer Ausführungsform eines erfindungsgemäßen elektronischen Schaltkreises und entsprechende Kommunikationsverbindungen zwischen zwei Teilnehmern verschieden performanter Netze in einem Real-Time Fast-Ethernet-Netzwerk (RTF) mit unterschiedlichen Übertragungsraten,
- Fig. 2: ein Flussdiagramm einer bevorzugten Ausführungsform des erfindungsgemäßen Verfahrens für den Empfang,
- Fig. 3: ein Flussdiagramm der bevorzugten Ausführungsform hinsichtlich des Sendens eines Datentelegramms von einem niederperformanten zu einem höherperformanten Netz,
- Fig. 4: eine bevorzugte Ausführungsform eines erfindungsgemäßen Automatisierungssystems,
- Fig. 5: ein Ausführungsbeispiel eines Automatisierungssystems mit unterschiedlich performanten Teil-Netzen.

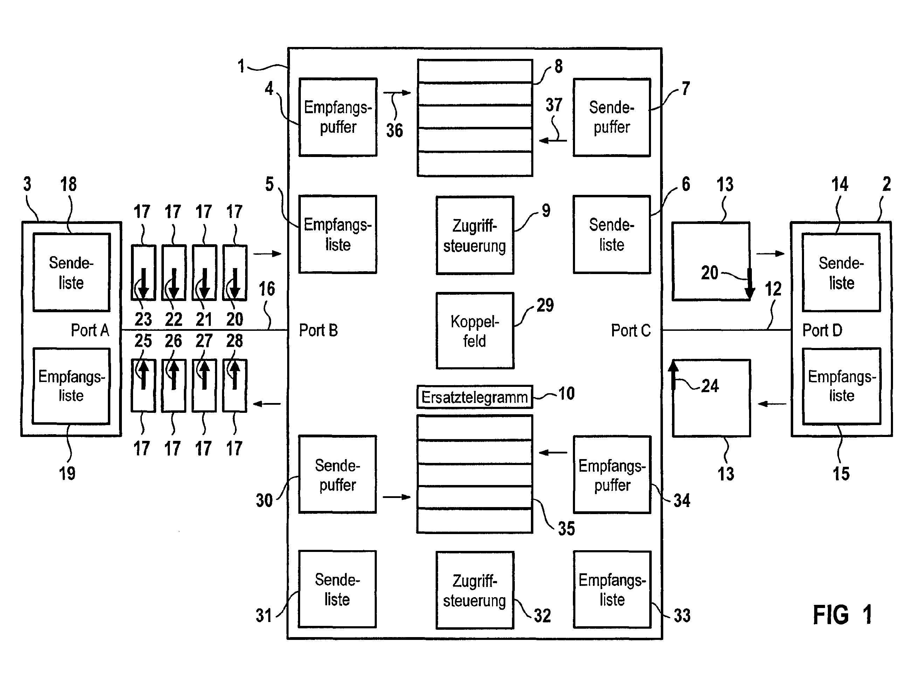

Die Fig. 1 zeigt einen elektronischen Schaltkreis 1, der als Koppelknoten zwischen den Knoten 2 und 3 dient.

Der Koppelknoten 1 hat die beiden Kommunikationsports Port B und Port C.

Dem Port B ist eine Empfangsliste 5 zugeordnet. Die Empfangsliste 5 bestimmt die von verschiedenen weiteren Knoten des Kommunikationssystems zu verschiedenen Zeitpunkten an den Port B zu empfangenden Datentelegramme. Die Art, der Zeitpunkt und der Adressat der Datentelegramme sind also im Voraus bestimmt; es ändern sich lediglich die mit den Datentelegrammen jeweils transportierten Nutzdaten.

Dem Port B ist ferner ein Empfangspuffer 4 zugeordnet. Der Empfangspuffer dient als Pufferspeicher für den vollständigen Empfang von zumindest einem Datentelegramm. Dazu hat der Empfangspuffer 4 eine Größe, die zumindest zur Aufnahme eines einzelnen Datentelegramms maximaler Länge ausreicht.

Der Port C hat eine Sendeliste 6, die in dem deterministischen Kommunikationssystem bestimmt, zu welchen Zeitpunkten welche Datentelegramme an welchen Empfänger von dem Koppelknoten 1 an dessen Port C zu senden sind. Dem Port C ist ein Sendepuffer 7 zugeordnet, der zur Pufferung eines zu sendenden Datentelegramms dient. Ähnlich wie der Empfangspuffer 4 muss auch der Sendepuffer 7 eine Größe haben, die zumindest zur Aufnahme eines Datentelegramms einer vorgegebenen maximalen Telegrammlänge ausreicht.

Zwischen dem Empfangspuffer 4 und dem Sendepuffer 7 befindet sich ein Zwischenspeicher 8. der Zwischenspeicher 8 dient zur Zwischenspeicherung von vollständig empfangenen Datentelegrammen. Sowohl der Empfangspuffer 4 als auch der Sendepuffer 7 können auf den Zwischenspeicher 8 zugreifen, wobei die entsprechenden Zugriffe durch eine Zugriffssteuerung 9, einen so genannten Arbiter, gesteuert wird.

Sobald ein Datentelegramm vollständig in dem Empfangspuffer 4 vorliegt, wird eine Anfrage an die Zugriffssteuerung 9 gestellt, um das in dem Empfangspuffer 4 vollständig vorliegende Datentelegramm in den Zwischenspeicher 8 zu kopieren. Der Zwischenspeicher 8 ist in verschiedene Speicherbereiche, beispielsweise zeilenweise, aufgeteilt. Die einzelnen Speicherbereiche werden durch einen Schreibzeiger 36 sowie einen Lesezeiger 37 identifiziert.

Die Speicherung des in dem Empfangspuffer 4 vollständig empfangenen Datentelegramms erfolgt dann in dem Speicherbereich des Zwischenspeichers 8, der durch die aktuelle Position des Schreibzeigers 36 identifiziert ist. Die Position des Schreibzeigers 36 wird nach der Schreiboperation in dem entsprechenden Speicherbereich inkrementiert, so dass der Schreibzeiger 36 dann auf den nächsten freien Speicherbereich zeigt.

Sobald der Lesezeiger 37 auf den Speicherbereich dieses zuvor abgespeicherten Datentelegramms zeigt, wird dieses aus dem Zwischenspeicher 8 in den Sendepuffer 7 geschoben, um von dort gemäß der Sendeliste 6 versendet zu werden. Nach dem Transfer des betreffenden Datentelegramms von dem Zwischenspeicher 8 in den Sendepuffer 7 wird die Position des Lesezeigers 37 entsprechend der abzuarbeitenden Sendeliste 6 inkrementiert.

Nach einer alternativen Ausführungsform beinhaltet die Sendeliste 6 für jedes zu sendende Element eine Adresse des Zwischenspeichers 8, aus dem das zu sendende Datentelegramm abzurufen ist. Entsprechend kann in dieser alternativen Ausführungsform auch die Kontrollstruktur der Empfangsliste für jedes zu empfangende Element eine Adresse des Zwischenspeichers 8 beinhalten, auf der ein entsprechendes vollständig empfangenes Datentelegramm zwischengespeichert werden soll.

Der Koppelknoten 1 ist mit dem Knoten 2 über eine Kommunikationsverbindung 12 verbunden. Bei der Kommunikationsverbindung 12 handelt es sich um eine niederperformante Verbindung mit einer relativ geringen Datenrate und einem relativ langen Übertragungszyklus 13, der auch als Rahmen oder "Frame" bezeichnet wird.

Die Kommunikationsverbindung 12 verbindet den Port C mit einem Port D des Knotens 2. Dem Port D sind eine Sendeliste 14 und eine Empfangsliste 15 zugeordnet, die wiederum die deterministische Übertragung von Datentelegrammen über das Kommunikationssystem, das heißt, über die Kommunikationsverbindung 12 spezifizieren.

Entsprechend ist der Port B des Koppelknotens 1 mit einem Port A des Knotens 3 über eine Kommunikationsverbindung 16 verbunden, wobei es sich bei der Kommunikationsverbindung 16 um eine hochperformante Verbindung mit einer relativ hohen Datenrate und einem relativ kurzen Übertragungszyklus 17 handelt.

In dem Port A des Knotens 3 sind wiederum eine Sendeliste 18 und eine Empfangsliste 19 für die deterministische Übertragung von Datentelegrammen von bzw. zu dem Knoten 3 vorhanden.

Die Kommunikation über die Kommunikationsverbindungen 12 und 16 läuft in den zyklisch wiederholten Übertragungszyklen 13 bzw. 17 ab, die ihrerseits in Zeitschlitze unterteilt sein können. Während eines Übertragungszyklus 13 bzw. 17 werden die entsprechenden Empfangs- und Sendelisten abgearbeitet, wobei verschiedene Datentelegramme den betreffenden Zeitschlitzen in einem Übertragungszyklus zugeordnet werden.

In dem betrachteten Beispiel der Fig. 1 sind vier zeitlich aufeinanderfolgende Übertragungszyklen 17 gezeigt, in denen jeweils ein oder mehrere Datentelegramme übertragen werden. Der Übersichtlichkeit halber ist in der Fig. 1 für jeden Übertragungszyklus 17 nur ein Datentelegramm 20, 21, 22 bzw. 23 gezeigt.

Aufgrund des in dem Koppelknoten 1 zur Anwendung kommenden "Store-and-Forward" Verfahrens brauchen die Kommunikationsverbindungen 12 und 16 nicht miteinander synchronisiert zu sein, das heißt, der Beginn der Übertragungszyklen 13 und 17 kann eine Phasenverschiebung aufweisen. Ebenso kann die Länge der Übertragungszyklen 13 und 17 beliebig gewählt werden, das heißt, es gibt keine Beschränkung auf eine gleiche Länge oder ein ganzzahliges Vielfaches. Allerdings muss die maximale Telegrammlänge in dem deterministischen Kommunikationssystem so definiert sein, das ein entsprechendes Datentelegramm in jedem Fall innerhalb eines Übertragungszyklus 13 oder 17 übertragen werden kann, um die Datenkonsistenz, insbesondere von Echtzeitdaten zu gewährleisten.

In einem zweiten Anwendungsfall wird von dem Knoten 2 gemäß dessen Sendeliste 14 ein Datentelegramm 24 in dem Übertragungszyklus 13 über die Kommunikationsverbindung 12 von dessen Port D an den Port C des Koppelknotens 1 gesendet. Das Datentelegramm 24 wird von dem Port C des Koppelknotens 1 gemäß dessen Empfangsliste 33 empfangen und in dem Empfangspuffer 34 zwischengespeichert.

Der Koppelknoten 1 sendet dann gemäß dessen Sendeliste 31 von dessen Port B in den nächsten Übertragungszyklen 17 die Datentelegramme 25, 26, 27 bzw. 28. Dies kann so erfolgen, da es sich bei den Datentelegramme 25 bis 28 jeweils um eine Kopie des Datentelegramms 24 handelt. Auf diese Art und Weise werden die Belange der Empfangsliste 19 erfüllt, die in jedem Datenschlitz des Übertragungszyklus 17 ein Datentelegramm erwartet.

Eine alternative Möglichkeit ist die Speicherung eines Ersatztelegramms in dem Speicher 10, welches keine Nutzinformation trägt. In diesem Fall ist nur eines der Datentelegramme 25 bis 28 eine Kopie des Datentelegramms 24, beispielsweise das Datentelegramm 25, während die weiteren Datentelegramme 26 bis 28 jeweils Kopien des Ersatztelegramms des Speichers 10 sind. Dieser Vorgang kann beispielsweise durch die Kontrolle der Steuerung 32 erfolgen.

Insgesamt ist es also so, dass bei einer n-fachen Sendung eines Datentelegramms von dem Knoten 3, beispielsweise einer vierfachen Sendung, dieses Datentelegramm von dem Knoten 1 an den Knoten 2 m-fach gesendet wird, wobei m < n ist, vorzugsweise m =1 wie in dem betrachteten Beispiel.

Andererseits wird bei einer n-fachen Sendung eines Datentelegramms über die niederperformante Kommunikationsverbindung 12 dieses Datentelegramm entweder m-fach wiederholt, das heißt, in dem betrachteten Beispiel erfolgt eine vierfache Wiederholung bei einer einmaligen Sendung, oder das gesendete Datentelegramm wird nur einmal gesendet und es erfolgt eine zusätzliche Sendung von m-1 Ersatztelegrammen.

Der Koppelknoten 1 hat ferner ein Koppelfeld 29 über welches in dem Koppelknoten 1 Kommunikationsverbindungen zwischen den Ports B und C sowie erforderlichenfalls weiterer in der Fig. 1 nicht gezeigter Ports des Koppelknotens 1 hergestellt werden können.

Der Koppelknoten 1 kann auch selbst integraler Bestandteil einer Automatisierungskomponente sein.

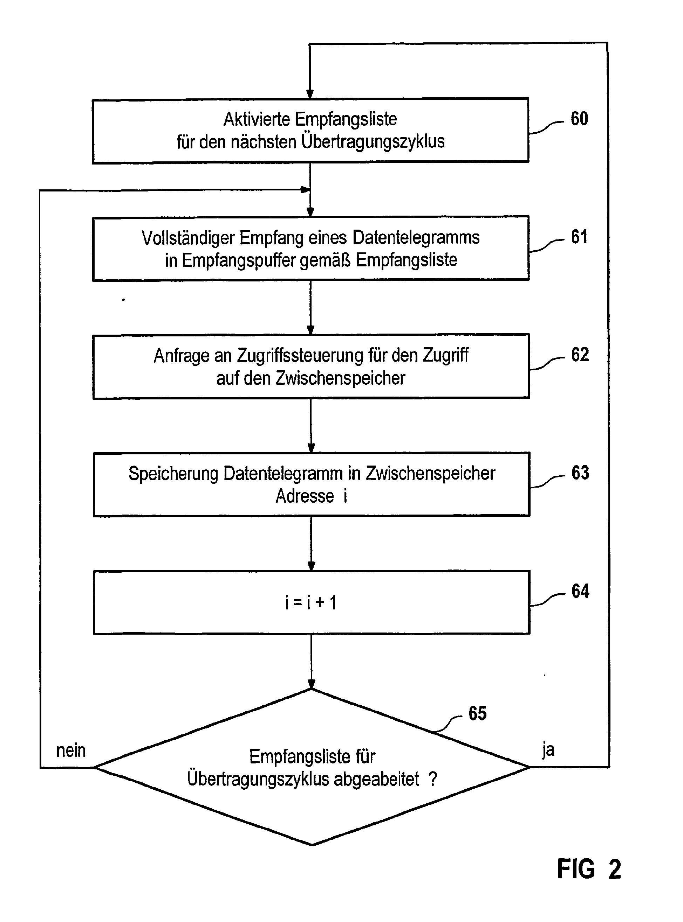

Die Fig. 2 zeigt ein entsprechendes Flussdiagramm für den Empfang eines Datentelegramms an einem Port das Koppelknotens. In dem Schritt 60 wird die Empfangsliste des betreffenden Ports für den nächsten Übertragungszyklus der betreffenden Kommunikationsverbindung aktiviert. In dem Schritt 61 erfolgt ein vollständiger Empfang eines Datentelegramms über die Kommunikationsverbindung gemäß der Empfangsliste. Dieses Datentelegramm wird in dem Empfangspuffer kurzzeitig zwischengepuffert.

In dem Schritt 62 erfolgt eine Anfrage an die Zugriffssteuerung für den Zugriff auf den Zwischenspeicher. Nachdem die Zugriffssteuerung ein entsprechendes Signal abgegeben hat, wird in dem Schritt 63 das betreffende Datentelegramm in dem Zwischenspeicher in einem Speicherbereich mit der Adresse i gespeichert. Die Adresse i wird dabei durch einen Schreibzeiger des Zwischenspeichers identifiziert.

Diese Adresse i wird in dem Schritt 64 inkrementiert, sodass der Schreibzeiger auf den nächstfolgenden freien Speicherbereich des Zwischenspeichers zeigt. Dabei kann es auch zu einem so genannten "Roll-Over" kommen.

Wenn die Empfangsliste mit dem Empfang dieses Datentelegramms für diesen Übertragungszyklus bereits abgearbeitet ist, geht die Ablaufsteuerung zu dem Schritt 60 zurück, um die Empfangsliste für den nächsten Übertragungszyklus zu aktivieren. Im gegenteiligen Fall geht die Ablaufsteuerung von dem Entscheidungsschritt 65 zu dem Schritt 61 zurück, um nachfolgende Datentelegramme gemäß derselben Empfangsliste in dem aktuellen Übertragungszyklus zu empfangen.

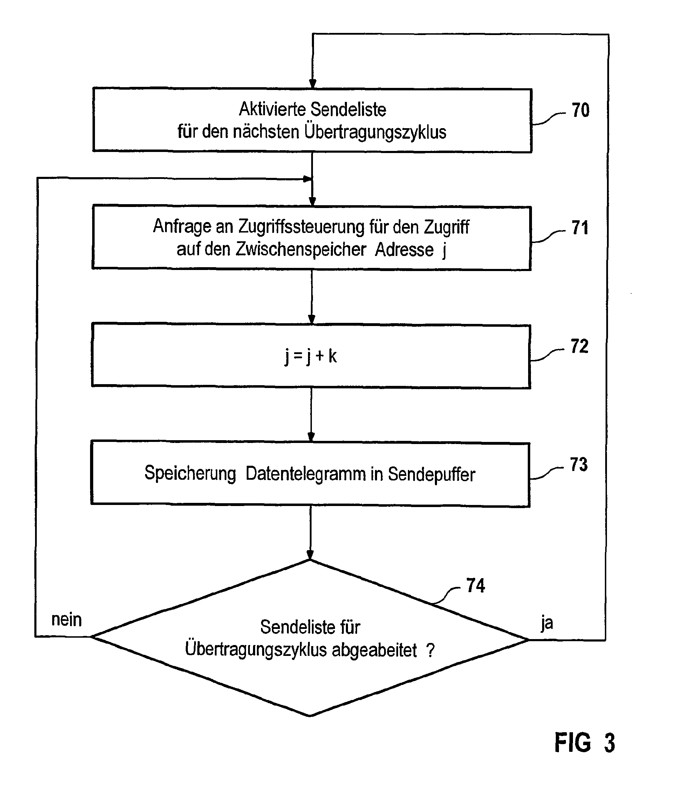

Die Fig. 3 zeigt die entsprechende Situation für die Sendung von einem anderen Port des Koppelknotens. Zunächst wird in dem Schritt 70 die entsprechende Sendeliste für den nächsten Übertragungszyklus aktiviert. In dem Schritt 71 erfolgt eine Anfrage an die Zugriffssteuerung für den Zugriff auf den Zwischenspeicher, um das nächste zu sendende Datentelegramm in den Sendepuffer zu transferieren und es von dort zu versenden. Der betreffende Speicherbereich der Adresse j des Zwischenspeichers wird dabei durch einen Lesezeiger des Zwischenspeichers identifiziert. Nachdem die Zugriffssteuerung durch ein entsprechendes Signal den Zugriff auf den Speicherbereich mit der Adresse j des Zwischenspeichers frei gegeben hat, wird der Lesezeiger in dem Schritt 72 um einen Betrag k inkrementiert und das Datentelegramm in dem Schritt 73 in den Sendepuffer transferiert.

Der Betrag k, um den der Lesezeiger inkrementiert wird, wird dabei durch die Sendeliste definiert. Die Zugriffssteuerung stellt dabei sicher, dass der Lesezeiger den Schreibzeiger nicht überholt und umgekehrt.

Von dem nachfolgenden Schritt 74 erfolgt dann eine Verzweigung zurück zu dem Schritt 70, wenn mit der Sendung des Datentelegramms die Sendeliste für den aktuellen Übertragungszyklus bereits abgearbeitet worden ist. Ist das Gegenteil der Fall, so erfolgt eine Verzweigung zu dem Schritt 71, um noch weitere Datentelegramme gemäß der Sendeliste in dem aktuellen Übertragungszyklus abzusenden.

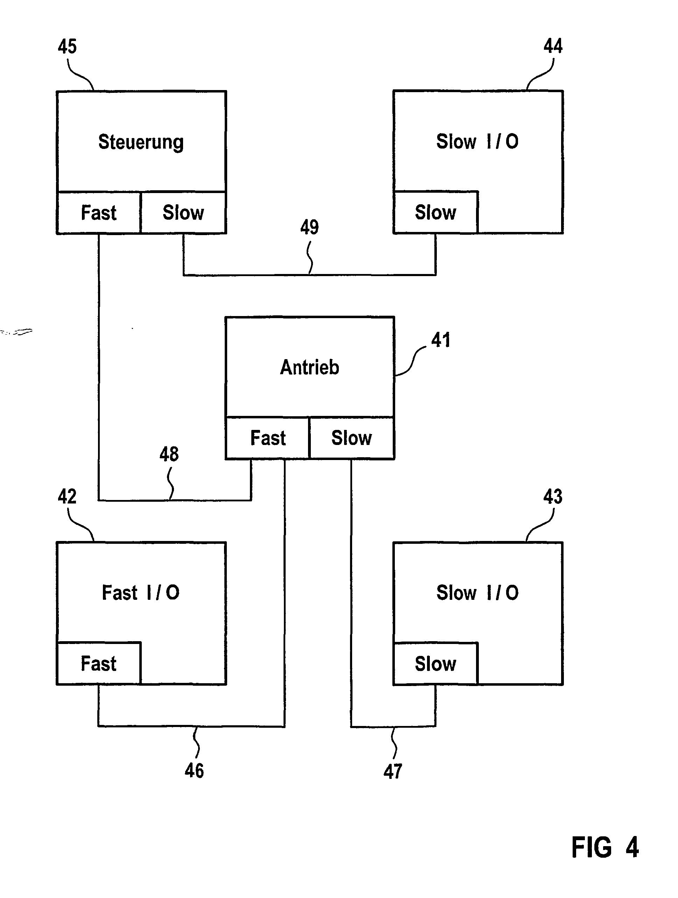

Die Fig. 4 zeigt ein Ausführungsbeispiel eines Automatisierungssystems mit den Knoten 41, 42, 43, 44 und 45. Bei dem Knoten 41 handelt es sich um einen Antrieb, der einen Koppelknoten mit den beiden Ports "Fast" und "Slow" beinhaltet. Der Port "Fast" entspricht dem Port B und der Port "Slow" entspricht dem Port C des Koppelknotens 1 der Fig. 1.

Der Port "Fast" des Knotens 41 ist mit dem Port "Fast" des Knotens 42 verbunden, entsprechend dem Port A des Knotens 3 der Fig. 1. Bei der die Ports "Fast" der Knoten 41 und 42 verbindenden Leitung handelt es sich entsprechend um eine hochperformante Kommunikationsverbindung 46 entsprechend der Kommunikationsverbindung 16 der Fig. 1.

Der andere Port "Slow" des Knoten 41 ist über eine niederperformante Kommunikationsverbindung 47 mit einem Port "Slow" des Knotens 43 verbunden, entsprechend der Kommunikationsverbindung 12 bzw. dem Port D der Fig. 1.

Ferner ist ein weiterer Port "Fast" mit einem entsprechenden Port "Fast" des Knotens 45, beispielsweise einer Steuerung, über eine hochperformante Kommunikationsverbindung 48 verbunden. Der Knoten 45 hat einen Port "Slow", der über eine niederperformante Kommunikationsverbindung 49 mit einem entsprechenden Port "Slow" des Knotens 44 verbunden ist. Der Knoten 45 beinhaltet ebenfalls einen Koppelknoten des in der Fig. 1 gezeigten Typs. Der Knoten 44 entspricht in seinem Aufbau wiederum dem Knoten 2 der Fig. 1.

In dem Automatisierungssystem der Fig. 4 ist es also möglich, dass beispielsweise ein Datentelegramm von dem Knoten 42 an den Knoten 44 übertragen wird, obwohl die Übertragung über drei Kommunikationsverbindungen jeweils unterschiedlicher Charakteristik erfolgen muss.

Dies kann auch für die Kopplung verschiedener Teil-Netze verwendet werden, wie mit Bezug auf die Fig. 5 näher erläutert wird:

Das Automatisierungssystem der Fig. 5 weist verschiedene Teil-Netze 50, 51, 52 und 53 auf. Die Teil-Netze 50 bis 53 haben dabei jeweils unterschiedliche Kommunikationssysteme mit unterschiedlichen Übertragungszyklen und / oder unterschiedlichen Datenraten. Vorzugsweise sind die Übertragungszyklen der verschiedenen Teil-Netze miteinander synchronisiert. Dies ist jedoch nicht zwingend der Fall.

Die entsprechenden Kommunikationssysteme dienen der Kommunikation der Knoten eines der Teil-Netze untereinander. Es kann jedoch auch eine Kommunikation über die Grenzen der Teil-Netze hinweg erfolgen. Hierzu sind die Knoten 54, 55 und 56 des Teil-Netzes 50 als Koppelknoten ausgebildet und zwar z. B. entsprechend Koppelknoten 1 der Fig. 1.

So können etwa der Knoten 57 des Teil-Netzes 52 und der Knoten 58 des Teil-Netzes 51 miteinander kommunizieren, obwohl die Teil-Netze 51 und 52 unterschiedliche Übertragungszyklen und / oder unterschiedliche Datenraten aufweisen. Entsprechend kann beispielsweise der Knoten 59 des Teil-Netzes 53 mit dem Knoten 57, dem Knoten 58 oder auch einem der Koppelknoten 54 bis 56 kommunizieren. Dies erlaubt es, verschiedene bereits bestehende Automatisierungssysteme zu einem Gesamtsystem miteinander zu vernetzen, ohne dass die Komponenten der bestehenden Systeme ausgetauscht werden müssen.

Vorzugsweise wird als Kommunikationssystem für die einzelnen Teil-Netze ein industrielles Ethernet, vorzugsweise ein isochrones Realtime Ethernet oder ein Realtime Fast Ethernet mit jeweils unterschiedlichen Übertragungszyklen, das heißt, unterschiedlichen Isochronzyklen, und / oder unterschiedlichen Datenraten verwendet. Die Länge der Übertragungszyklen in den verschiedenen Teil-Netzen kann dabei beispielsweise 500 ms, 10 ms und 1ms betragen. Die unterschiedlichen Übertragungsraten können beispielsweise 100 MB/s, 10 MB/S und 1 MB/s betragen. Für den Übergang von einer Übertragungsrate auf eine andere findet in dem entsprechenden Koppelknoten eine Zwischenspeicherung der Echtzeitdaten statt.

Zusammengefasst betrifft die Erfindung ein Verfahren und einen elektronischen Schaltkreis für eine skalierbare Kommunikationsschnittstelle zwischen einer ersten Kommunikationsverbindung 16 mit einem ersten Übertragungszyklus 17 einer ersten Länge und einer zweiten Kommunikationsverbindung 12 mit einem zweiten Übertragungszyklus 13 einer zweiten Länge, mit einer Empfangsliste 5, 15, 19, 33 für den ersten Übertragungszyklus und einer Sendeliste 6, 14, 18, 31 für den zweiten Übertragungszyklus, wobei ein gemäß der Empfangsliste empfangenes Datentelegramm 20, 21, 22, 23, 24, 25, 26, 27, 28 einem Element der Sendeliste zugeordnet ist, und mit einem Empfangspuffer 4, 34, einem Sendepuffer 7, 30 und einem Zwischenspeicher 8 für gemäß der Empfangsliste vollständig empfangene Datentelegramme und gemäß der Sendeliste zu sendende Datentelegramme, wobei sowohl der Empfangspuffer als auch der Sendepuffer mit dem Zwischenspeicher verbindbar sind.

## Patentansprüche

1. Elektronischer Schaltkreis für eine skalierbare Kommunikationsschnittstelle zwischen einer ersten zyklisch getakteten Kommunikationsverbindung (16) mit einem ersten Übertragungszyklus (17) einer ersten Länge und einer zweiten zyklisch getakteten Kommunikationsverbindung (12) mit einem zweiten Übertragungszyklus (13) einer zweiten Länge, mit einer Empfangsliste (5, 15, 19, 33) für den ersten Übertragungszyklus und einer Sendeliste (6, 14, 18, 31) für den zweiten Übertragungszyklus, wobei ein gemäß der Empfangsliste empfangenes Datentelegramm (20, 21, 22, 23, 24, 25, 26, 27, 28) einem Element der Sendeliste zugeordnet ist, und mit einem Empfangspuffer (4, 34), einem Sendepuffer (7, 30) und einem Zwischenspeicher (8) für gemäß der Empfangsliste vollständig empfangene Datentelegramme und gemäß der Sendeliste zu sendende Datentelegramme, wobei sowohl der Empfangspuffer als auch der Sendepuffer mit dem Zwischenspeicher verbindbar sind,
**dadurch gekennzeichnet, dass**
die Empfangsliste im Voraus festgelegte Empfangszeitpunkte von Datentelegrammen während des ersten Übertragungszyklus bestimmt und die Sendeliste im Voraus festgelegte Sendezeitpunkte von Datentelegrammen während des zweiten Übertragungszyklus bestimmt.

2. Elektronischer Schaltkreis nach Anspruch 1 mit einer Zugriffssteuerung (9, 32) für die Steuerung von Zugriffen der Sende- und Empfangspuffer auf den Zwischenspeicher.

3. Elektronischer Schaltkreis nach Anspruch 1 oder 2, bei dem der Zwischenspeicher so ausgebildet ist, dass während des ersten Übertragungszyklus empfangene Datentelegramme in aufeinander folgenden Speicherbereichen abgelegt werden und mit einem Empfangszeiger (36) auf den jeweils nächsten freien Speicherbereich für die Zwischenspeicherung eines vollständig empfangen Datentelegramms.

4. Elektronischer Schaltkreis nach Anspruch 1, 2 oder 3, mit einem Sendezeiger (37) auf einen Speicherbereich des Zwischenspeichers mit einem während des zweiten Übertragungszyklus zu sendenden Datentelegramm.

5. Elektronischer Schaltkreis nach Anspruch 4 wenn von Anspruch 3 abhängend, bei dem die Zugriffssteuerung so ausgebildet ist, dass der Empfangszeiger und der Sendezeiger nicht auf den selben Speicherbereich zeigen.

6. Elektronischer Schaltkreis nach einem der vorhergehenden Ansprüche 1 bis 5, wobei die erste und die zweite Kommunikationsverbindung unterschiedliche Übertragungsraten haben und nicht synchronisiert sind.

7. Elektronischer Schaltkreis nach einem der vorhergehenden Ansprüche 1 bis 6, wobei die ersten und die zweiten Übertragungszyklen synchron sind und die ersten und zweiten Längen gleich sind oder ein ganzzahliges Vielfaches voneinander betragen.

8. Elektronischer Schaltkreis nach einem der vorhergehenden Ansprüche 1 bis 7, bei dem die Sendeliste zum m-fachen Absenden eines Datentelegramms innerhalb von m aufeinander folgenden Übertragungszyklen ausgebildet ist, nachdem das Datentelegramm n-fach innerhalb des ersten Übertragungszyklus gemäß der Empfangsliste empfangen worden ist.

9. Elektronischer Schaltkreis nach Anspruch 8, derart ausgelegt, dass das Datentelegramm gemäß der Sendeliste nur einmal gesendet wird und dass zusätzlich eine Anzahl von m-1 Ersatzdatentelegrammen gemäß der Sendeliste in dem zweiten Übertragungszyklus gesendet werden.

10. Elektronischer Schaltkreis nach einem der vorhergehenden Ansprüche 1 bis 9, bei dem die erste und / oder die zweite Kommunikationsverbindung bidirektional sind und jeder der bidirektionalen Kommunikationsverbindungen jeweils eine Sendeliste und eine Empfangsliste zugeordnet sind.

11. Elektronischer Schaltkreis nach einem der vorhergehenden Ansprüche 1 bis 10, bei dem es sich bei dem Datentelegramm um Echtzeitdaten handelt.

12. Elektronischer Schaltkreis nach einem der vorhergehenden Ansprüche 1 bis 11, wobei es sich bei den ersten und zweiten Kommunikationsverbindungen um ein industrielles Ethernet, insbesondere um ein isochrones Realtime Ethernet oder ein Realtime Fast Ethernet handelt.

13. Elektronischer Schaltkreis nach einem der vorhergehenden Ansprüche 1 bis 12 mit mehreren Eingangs- und / oder Ausgangsports, denen jeweils eine Empfangs- und / oder Sendeliste zugeordnet ist und mit einem Koppelfeld (29) zur Koppelung von einem der Ports mit einem oder mehreren der anderen Ports.

14. Automatisierungssystem mit mehreren Komponenten (41, 42, 43, 44, 45), die durch Kommunikationsverbindungen (46, 47, 48, 49) miteinander verbunden sind, in dem jede der Komponenten einen elektronischen Schaltkreis nach einem der vorhergehenden Ansprüche 1 bis 13 als integralen Bestandteil oder als Zusatzgerät aufweist.

15. Automatisierungssystem mit zumindest einem ersten Teil-Netzwerk (50, 51, 52, 53) mit ersten Kommunikationsverbindungen und mit einem zweiten Teil-Netzwerk mit zweiten Kommunikationsverbindungen und mit zumindest einem Koppelknoten (54, 55, 56) zwischen den ersten und zweiten Teil-Netzwerken mit einem elektronischen Schaltkreis nach einem der vorhergehenden Ansprüche 1 bis 13.

16. Automatisierungssystem nach Anspruch 15 mit mehreren Koppelknoten, die durch ein drittes Teil-Netzwerk (50) miteinander verbunden sind.

17. Automatisierungssystem nach Anspruch 14, 15 oder 16, bei dem die unterschiedlichen Teil-Netzwerke verschiedene Übertragungszyklen und / oder Übertragungsraten aufweisen.

18. Verfahren zum Betreiben einer Kommunikationsschnittstelle zwischen einer ersten zyklisch getakteten Kommunikationsverbindung mit einem ersten Übertragungszyklus einer ersten Länge und einer zweiten zyklisch getakteten Kommunikationsverbindung mit einem zweiten Übertragungszyklus einer zweiten Länge mit folgenden Schritten:
a vollständiger Empfang eines Datentelegramms gemäß einer dem ersten Übertragungszyklus zugeordneten Empfangsliste, wobei die Empfangsliste die Empfangszeitpunkte von während des ersten Übertragungszyklus zu empfangenden Datentelegrammen im Voraus bestimmt,
b. Zwischenspeicherung des vollständig empfangenen Datentelegramms,
c. Senden des Datentelegramms gemäß einer dem zweiten Übertragungszyklus zugeordneten Sendeliste und wobei die Sendeliste den Sendezeitpunkt von im zweiten Übertragungszyklus zu sendenden Datentelegrammen im Voraus bestimmt.

19. Verfahren nach Anspruch 18, bei dem in dem ersten Übertragungszyklus empfangene Datentelegramme in aufeinander folgenden Speicherbereichen eines Zwischenspeichers abgelegt werden.

20. Verfahren nach Anspruch 18 oder 19, bei dem in dem zweiten Übertragungszyklus zu sendende Datentelegramme aus dem Zwischenspeicher ausgelesen werden, wobei die jeweiligen Speicherbereiche voneinander durch einen Offset getrennt sind.

21. Verfahren nach einem der vorhergehenden Ansprüche 18, 19 oder 20, bei dem durch eine Zugriffssteuerung sichergestellt wird, dass während einer logischen Zeiteinheit kein Zugriff auf denselben Speicherbereich für die Zwischenspeicherung eines vollständig empfangenen Datentelegramms und dessen Sendung erfolgt.

22. Verfahren nach einem der vorhergehenden Ansprüche 18 bis 21, bei dem die erste Kommunikationsverbindung und die zweite Kommunikationsverbindung unterschiedliche Übertragungsraten aufweisen und/oder der erste und der zweite Übertragungszyklus asynchron sind.

23. Verfahren nach Anspruch 22, bei dem die erste und zweite Länge gleich oder ungleich sind oder ein ganzzahliges, oder nicht ganzzahliges Verhältnis aufweisen.

24. Verfahren nach einem der vorhergehenden Ansprüche 18 bis 22, bei dem ein Datentelegramm von einem ersten Teilnehmer der ersten Kommunikationsverbindung innerhalb des ersten Übertragungszyklus empfangen wird und das Datentelegramm m-fach innerhalb von m aufeinander folgenden Übertragungszyklen an einen zweiten Teilnehmer der zweiten Kommunikationsverbindung gesendet wird.

25. Verfahren nach Anspruch 23, bei dem das Datentelegramm nur einmal in dem zweiten Übertragungszyklus gesendet wird und ein Ersatzdatentelegramm m-1-fach in nachfolgenden zweiten Übertragungszyklen gesendet wird.

26. Verfahren nach einem der vorhergehenden Ansprüche 18 bis 24, bei dem es sich bei dem Datentelegramm um Echtzeitdaten handelt.

27. Verfahren nach einem der vorhergehenden Ansprüche 18 bis 25, wobei die ersten und zweiten Kommunikationsverbindungen ausgebildet sind Daten in äquidistanten Kommunikationszyklen auszutauschen.

28. Verfahren nach einem der vorhergehenden Ansprüche 18 bis 26, wobei es sich bei der ersten und der zweiten Kommunikationsverbindung jeweils um industrielles Ethernet, insbesondere ein isochrones Realtime Ethernet oder ein Realtime Fast Ethernet handelt.

29. Verfahren nach einem der vorhergehenden Ansprüche 18 bis 27, wobei mehrere Ein- und / oder Ausgangsports, denen jeweils eine Empfangs- und / oder Sendeliste zugeordnet ist, über ein Koppelfeld gekoppelt werden.

30. Verfahren nach einem der vorhergehenden Ansprüche 18 bis 28, bei dem die ersten und zweiten Übertragungszyklen keine Phasenverschiebung aufweisen.

31. Computerprogrammprodukt mit Programm-Mitteln zur Durchführung eines Verfahrens nach einem der vorhergehenden Ansprüche 18 bis 29, wenn die Programm-Mittel auf einem elektronischem Schaltkreis oder einem Automatisierungssystem ausgeführt werden.

## Claims

1. An electronic switching circuit for a scalable communication interface between a first cyclically clocked communication connection (16) with a first transmission cycle (17) of a first length and a second cyclically clocked communication connection (12) with a second transmission cycle (13) of a second length, with a receive list (5, 15, 19, 33) for the first transmission cycle and a send list (6, 14, 18, 31) for the second transmission cycle, with a data telegram (20, 21, 22, 23, 24, 25, 26, 27, 28) received according to the receive list being assigned to an element of the send list and with a receive buffer (4, 34), a send buffer (7, 30) and a storage buffer (8) for data telegrams received in full according to the receive list and data telegrams to be sent according to the send list, it being possible to connect both the send buffer and the receive buffer to the storage buffer,
**characterised in that**
the receive list defines previously determined receive times for data telegrams during the first transmission cycle and the send list defines previously determined send times for data telegrams during the second transmission cycle.

2. The electronic switching circuit as claimed in claim 1, with an access controller (9, 32) to control access by the send and receive buffers to the storage buffer.

3. The electronic switching circuit as claimed in claim 1 or 2, in which the storage buffer is configured such that data telegrams received during the first transmission cycle are stored in successive storage areas and having a receive pointer (36) to point to the next free storage area in each instance for buffering a data telegram received in full.

4. The electronic switching circuit as claimed in claim 1, 2, or 3, with a send pointer (37) to point to a storage area of the storage buffer containing a data telegram to be sent during the second transmission cycle.

5. The electronic switching circuit as claimed in claim 4 if dependent on claim 3, in which the access controller is configured such that the receive pointer and the send pointer do not point to the same storage area.

6. The electronic switching circuit as claimed in one of the preceding claims 1 to 5, in which the first and second communication connections have different transmission rates and are not synchronised.

7. The electronic switching circuit as claimed in one of the preceding claims 1 to 6, in which the first and second transmission cycles are synchronous and the first and second lengths are identical or a whole-number multiple of each other.

8. The electronic switching circuit as claimed in one of the preceding claims 1 to 7, in which the send list is configured for the m-fold transmission of a data telegram within m successive transmission cycles, after the data telegram has been received n-fold according to the receive list within the first transmission cycle.

9. The electronic switching circuit as claimed in claim 8, designed such that the data telegram is sent only once according to the send list and that a number m-1 of substitute data telegrams are also sent according to the send list in the second transmission cycle.

10. The electronic switching circuit as claimed in one of the preceding claims 1 to 9, in which the first and/or second communication connection is/are bidirectional and a send list and receive list respectively are assigned to each of the bidirectional communication connections.

11. The electronic switching circuit as claimed in one of the preceding claims 1 to 10, in which the data telegram is real-time data.

12. The electronic switching circuit as claimed in one of the preceding claims 1 to 11, in which the first and second communication connections are an industrial Ethernet, in particular an isochronous real-time Ethernet or a real-time fast Ethernet.

13. The electronic switching circuit as claimed in one of the preceding claims 1 to 12, with a number of input and/or output ports, to which a receive and/or send list is/are assigned respectively and with a switching matrix (29) to couple one of the ports to one or more of the other ports.

14. An automation system with a number of components (41, 42, 43, 44, 45), which are connected together by means of communication connections (46, 47, 48, 49), in which each of the components has an electronic switching circuit as claimed in one of the preceding claims 1 to 13 as an integral part or as an additional device.

15. An automation system with at least a first sub-network (50, 51, 52, 53) with first communication connections and with a second sub-network with second communication connections and with at least one coupling node (54, 55, 56) between the first and second sub-networks with an electronic switching circuit as claimed in one of the preceding claims 1 to 13.

16. The automation system as claimed in claim 15 with a number of coupling nodes, which are connected together by a third sub-network (50).

17. The automation system as claimed in claim 14, 15 or 16, in which the various sub-networks have different transmission cycles and/or transmission rates.

18. A method for operating a communication interface between a first cyclically clocked communication connection with a first transmission cycle of a first length and a second cyclically clocked communication connection with a second transmission cycle of a second length, with the following steps:
a. Receipt of a data telegram in full according to a receive list assigned to the first transmission cycle, with the receive list defining in advance the receive times of data telegrams to be received during the first transmission cycle,
b. Buffering of the data telegram received in full,
c. Transmission of the data telegram according to a send list assigned to the second transmission cycle, with the send list defining in advance the send times of data telegrams to be sent in the second transmission cycle.

19. The method as claimed in claim 18, in which data telegrams received in the first transmission cycle are stored in successive storage areas of a storage buffer.

20. The method as claimed in claim 18 or 19, in which data telegrams to be sent in the second transmission cycle are read from the storage buffer, with the respective storage areas being separated from each other by an offset.

21. The method as claimed in one of the preceding claims 18, 19 or 20, in which an access controller ensures that there is no access to the same storage area for the purposes of buffering a data telegram received in full and its transmission during a logical time unit.

22. The method as claimed in one of the preceding claims 18 to 21, in which the first communication connection and the second communication connection have different transmission rates and/or the first and second transmission cycles are asynchronous.

23. The method as claimed in claim 22, in which the first and second lengths are identical or non-identical or have a whole-number or a non-whole-number relationship.

24. The method as claimed in one of the preceding claims 18 to 22, in which a data telegram from a first user of the first communication connection is received within the first transmission cycle and the data telegram is sent m-fold within m successive transmission cycles to a second user of the second communication connection.

25. The method as claimed in claim 23, in which the data telegram is sent only once in the second transmission cycle and a substitute data telegram is sent m-1-fold in successive second transmission cycles.

26. The method as claimed in one of the preceding claims 18 to 24, in which the data telegram is real-time data.

27. The method as claimed in one of the preceding claims 18 to 25, in which the first and second communication connections are configured to exchange data in equidistant communication cycles.

28. The method as claimed in one of the preceding claims 18 to 26, in which the first and second communication connections respectively are industrial Ethernet, in particular isochronous real-time Ethernet or real-time fast Ethernet.

29. The method as claimed in one of the preceding claims 18 to 27, in which a number of input and/or output ports, to which a receive and/or send list is/are respectively assigned, are coupled via a switching matrix.

30. The method as claimed in one of the preceding claims 18 to 28, in which the first and second transmission cycles have no phase offset.

31. A computer programme product with programme means to implement a method as claimed in one of the preceding claims 18 to 29, where the programme means are executed on an electronic switching circuit or an automation system.

## Revendications

1. Circuit électronique pour une interface de communication graduable entre une première liaison de communication cadencée cyclique (16) avec un premier cycle de transmission (17) d'une première longueur et une deuxième liaison de communication cadencée cyclique (12) avec un deuxième cycle de transmission (13) d'une deuxième longueur, avec une liste de réception (5, 15, 19, 33) pour le premier cycle de transmission et une liste d'émission (6, 14, 18, 31) pour le deuxième cycle de transmission, un télégramme de données (20, 21, 22, 23, 24, 25, 26, 27, 28) reçu selon la liste de réception étant associé à un élément de la liste d'émission, et avec un tampon de réception (4, 34), un tampon d'émission (7, 30) et une mémoire intermédiaire (8) pour des télégrammes de données reçus complètement selon la liste de réception et pour des télégrammes de données à émettre selon la liste d'émission, le tampon de réception et le tampon d'émission pouvant être reliés à la mémoire intermédiaire,
**caractérisé par le fait que**
la liste de réception détermine des instants de réception préalablement fixés de télégrammes de données pendant le premier cycle de transmission et la liste d'émission détermine des instants d'émission préalablement fixés de télégrammes de données pendant le deuxième cycle de transmission.

2. Circuit électronique selon la revendication 1, avec une commande d'accès (9, 32) pour la commande d'accès des tampons d'émission et de réception à la mémoire intermédiaire.

3. Circuit électronique selon la revendication 1 ou 2, dans lequel la mémoire intermédiaire est conçue de telle sorte que des télégrammes de données reçus pendant le premier cycle de transmission sont enregistrés dans des zones de mémoire consécutives et avec un pointeur de réception (36) sur la prochaine zone de mémoire libre respective pour la mémorisation temporaire d'un télégramme de données complètement reçu.

4. Circuit électronique selon la revendication 1, 2 ou 3, avec un pointeur d'émission (37) sur une zone de mémoire de la mémoire intermédiaire avec un télégramme de données à émettre pendant le deuxième cycle de transmission.

5. Circuit électronique selon la revendication 4 lorsqu'elle dépend de la revendication 3, dans lequel la commande d'accès est conçue de telle sorte que le pointeur de réception et le pointeur d'émission ne pointent pas sur la même zone de mémoire.

6. Circuit électronique selon l'une des revendications précédentes 1 à 5, dans lequel la première et la deuxième liaison de communication ont des taux de transmission différents et ne sont pas synchronisées.

7. Circuit électronique selon l'une des revendications précédentes 1 à 6, dans lequel les premiers et les deuxièmes cycles de transmission sont synchrones et les premières et les deuxièmes longueurs sont identiques ou sont un multiple entier l'une de l'autre.

8. Circuit électronique selon l'une des revendications précédentes 1 à 7, dans lequel la liste d'émission est conçue pour émettre m fois un télégramme de données à l'intérieur de m cycles de transmission consécutifs après que le télégramme de données a été reçu n fois à l'intérieur du premier cycle de transmission selon la liste de réception.

9. Circuit électronique selon la revendication 8, conçu de telle sorte que le télégramme de données est émis seulement une fois selon la liste d'émission et que, en plus, m - 1 télégrammes de données de remplacement sont émis selon la liste d'émission dans le deuxième cycle de transmission.

10. Circuit électronique selon l'une des revendications précédentes 1 à 9, dans lequel la première et/ou la deuxième liaison de communication sont bidirectionnelles et une liste d'émission ainsi qu'une liste de réception sont associées à chacune des liaisons de communication bidirectionnelles.

11. Circuit électronique selon l'une des revendications précédentes 1 à 10, dans lequel le télégramme de données correspond à des données à temps réel.

12. Circuit électronique selon l'une des revendications précédentes 1 à 11, dans lequel la première et la deuxième liaison de communication correspondent à un Ethernet industriel, notamment un Realtime Ethernet isochrone ou un Realtime Fast Ethernet.

13. Circuit électronique selon l'une des revendications précédentes 1 à 12, avec plusieurs ports d'entrée et/ou de sortie auxquels est associée à chaque fois une liste de réception et/ou d'émission et avec un réseau de connexion (29) pour la connexion de l'un des ports à l'un ou plusieurs des autres ports.

14. Système d'automatisation avec plusieurs composants (41, 42, 43, 44, 45) qui sont reliés entre eux par des liaisons de communication (46, 47, 48, 49), chacun des composants comportant un circuit électronique selon l'une des revendications précédentes 1 à 13 comme partie intégrante ou comme accessoire.

15. Système d'automatisation avec au moins un premier sous-réseau (50, 51, 52, 53) avec des premières liaisons de communication, avec un deuxième sous-réseau avec des deuxièmes liaisons de communication et avec au moins un noeud de connexion (54, 55, 56) entre les premiers et deuxièmes sous-réseaux avec un circuit électronique selon l'une des revendications précédentes 1 à 13.

16. Système d'automatisation selon la revendication 15, avec plusieurs noeuds de connexion qui sont reliés entre eux par un troisième sous-réseau (50).

17. Système d'automatisation selon la revendication 14, 15 ou 16, dans lequel les différents sous-réseaux ont des cycles de transmission différents et/ou des taux de transmission différents.

18. Procédé pour exploiter une interface de communication entre une première liaison de communication cadencée cyclique avec un premier cycle de transmission d'une première longueur et une deuxième liaison de communication cadencée cyclique avec un deuxième cycle de transmission d'une deuxième longueur, avec les étapes suivantes :
a. réception complète d'un télégramme de données selon une liste de réception associée au premier cycle de transmission, la liste de réception déterminant préalablement les instants de réception de télégrammes de données à recevoir pendant le premier cycle de transmission,
b. mémorisation temporaire du télégramme de données complètement reçu,
c. émission du télégramme de données selon une liste d'émission associée au deuxième cycle de transmission, la liste d'émission déterminant préalablement l'instant d'émission de télégrammes de données à émettre dans le deuxième cycle de transmission.

19. Procédé selon la revendication 18, dans lequel des télégrammes de données reçus pendant le premier cycle de transmission sont enregistrés dans des zones de mémoire consécutives d'une mémoire intermédiaire.

20. Procédé selon la revendication 18 ou 19, dans lequel des télégrammes de données à émettre dans le deuxième cycle de transmission sont lus dans la mémoire intermédiaire, les zones de mémoire respectives étant séparées l'une de l'autre par un décalage.

21. Procédé selon l'une des revendications précédentes 18, 19 ou 20, dans lequel on garantit par une commande d'accès que, pendant une unité de temps logique, il ne s'effectue aucun accès à la même zone de mémoire pour la mémorisation temporaire d'un télégramme de données complètement reçu et pour son émission.

22. Procédé selon l'une des revendications précédentes 18 à 21, dans lequel la première liaison de communication et la deuxième liaison de communication ont des taux de transmission différents et/ou le premier et le deuxième cycle de transmission sont asynchrones.

23. Procédé selon la revendication 22, dans lequel la première et la deuxième longueur sont identiques ou non ou ont entre elles un rapport de division entier ou non.

24. Procédé selon l'une des revendications précédentes 18 à 22, dans lequel un télégramme de données est reçu par un premier utilisateur de la première liaison de communication à l'intérieur du premier cycle de transmission et le télégramme de données est émis m fois à l'intérieur de m cycles de transmission consécutifs vers un deuxième utilisateur de la deuxième liaison de communication.

25. Procédé selon la revendication 23, dans lequel le télégramme de données est émis seulement une fois dans le deuxième cycle de transmission et un télégramme de données de remplacement est émis m-1 fois dans des deuxièmes cycles de transmission suivants.

26. Procédé selon l'une des revendications précédentes 18 à 24, dans lequel le télégramme de données correspond à des données à temps réel.

27. Procédé selon l'une des revendications précédentes 18 à 25, dans lequel les premières et deuxièmes liaisons de communication sont conçues pour échanger des données dans des cycles de communication équidistants.

28. Procédé selon l'une des revendications précédentes 18 à 26, dans lequel la première et la deuxième liaison de communication correspondent à un Ethernet industriel, notamment un Realtime Ethernet isochrone ou un Realtime Fast Ethernet.

29. Procédé selon l'une des revendications précédentes 18 à 27, dans lequel plusieurs ports d'entrée et/ou de sortie, auxquels est associée à chaque fois une liste de réception et/ou d'émission, sont connectés par l'intermédiaire d'un réseau de connexion.

30. Procédé selon l'une des revendications précédentes 18 à 28, dans lequel les premiers et deuxièmes cycles de transmission ne présentent pas de déphasage.

31. Programme informatique avec des moyens formant programme pour la mise en oeuvre d'un procédé selon l'une des revendications précédentes 18 à 29, les moyens formant programme étant exécutés sur un circuit électronique ou sur un système d'automatisation.
